# EUROPÄISCHE PATENTSCHRIFT

(11) **EP 1 849 429 B1**
(45) Veröffentlichungstag und Bekanntmachung des Hinweises auf die Patenterteilung: **17.06.2009**
(21) Anmeldenummer: 07007360.6
(22) Anmeldetag: 10.04.2007
(51) Int. Cl.: A61C 3/02

(54) **Dentalbohrer**
Dental drill
Fraise dentaire

(30) Priorität: 24.04.2006 DE 102006018933
(43) Veröffentlichungstag der Anmeldung: 31.10.2007
(73) Patentinhaber: Gebr. Brasseler GmbH & Co. KG, D-32657 Lemgo (DE)
(72) Erfinder: Danger, Karl-Heinz, 32758 Detmold (DE); Krumsiek, Michael, 32657 Lemgo (DE)
(74) Vertreter: Weber, Joachim

(56) Entgegenhaltungen:
- DE-C- 673 695
- DE-C- 677 703
- DE-C1- 19 826 276
- DE-U1- 20 302 618
- US-A- 6 106 291

## Beschreibung

Die Erfindung bezieht sich auf einen Dentalbohrer mit den Merkmalen des Oberbegriffs des Anspruchs 1.

Im Einzelnen bezieht sich die Erfindung auf einen Dentalbohrer mit einem mit Schneiden versehenen Kopf, wobei der Kopf eine zumindest abgerundete Grundform aufweist. Diese kann kugelförmig oder birnenförmig sein, so wie dies aus dem Stand der Technik, beispielsweise der DE 198 26 276 C1, vorbekannt ist.

Der Erfindung liegt die Aufgabe zugrunde, einen Dentalbohrer der eingangs genannten Art zu schaffen, welcher eine verbesserte Präparation eines Zahnes und eine verbesserte Entfernung von erkranktem Dentin bei der Kavitätenpräparation ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass der Dentalbohrer aus einem keramischen Material gefertigt ist. Die Dimensionierung und Ausgestaltung erfolgt dabei erfindungsgemäß so, dass die Schartigkeit der Schneiden (Schneidenschartigkeit) zwischen 2,5 und 7 µm beträgt und dass der Schneidengrund einen Radius zwischen 0,03 und 0,12 mm aufweist. Schneidenschartigkeit im Sinne der Erfindung bedeutet die Tiefe der sich bei der Herstellung des Dentalbohrers und der Erzeugung der Schneide ergebenden Scharten.

Erfindungsgemäß hat sich herausgestellt, dass der Dentalbohrer besonders vorteilhaft zur Entfernung von erkranktem Dentin aus Kavitäten bei einer Kavitätenpräparation geeignet ist, wobei erkranktes Dentin entfernt wird, gesundes Dentin jedoch geschont wird. Dies steht im Gegensatz zu metallischen Dentalbohrern, welche, bedingt durch die Materialauswahl sowie die Schneidengeometrie, auch gesundes Dentin abtragen.

Durch die Ausgestaltung der Schneiden kann erreicht werden. dass die Bohrer bei weichem/kariösem Material schneiden und bei fester, gesunder Zahnsubstanz lediglich über die Oberfläche schaben und so gut wie kein Material mehr abtragen. Dadurch ergibt sich ein bestimmtes taktiles Gefühl, über das der Anwender Feedback erhält. Dieses kann durch unterschiedliche Zahnprofile sowie unterschiedliche Zahnteilungen und Zahntiefen erreicht werden, so dass sich die Wirkwinkel innerhalb eines Bohrers ggf. unterscheiden.

Der erfindungsgemäße Dentalbohrer ist somit insbesondere zum Exkavieren von Karies besonders geeignet.

Die Form des Kopfes ist bevorzugterweise rund oder birnenförmig, der Kopf weist stirnseitig eine Übergangsschneide oder Querschneide auf, welche durch das Zusammenwirken zweier der mehreren Schneiden gebildet wird. Hierdurch werden die Schnittleistung sowie die Führung des Dentalbohrers verbessert.

Bevorzugterweise besteht der erfindungsgemäße Dentalbohrer aus Zirkonoxid oder Zirkonoxid mit Zusätzen.

Erfindungsgemäß ist es möglich, unterschiedliche Schneiden-Zahlen zu verwenden, vier, sechs, acht oder zehn Schneiden, abhängig von der Dimensionierung und der Gestaltung des Kopfes des erfindungsgemäßen Dentalbohrers.

Durch die erfindungsgemäß vorgesehene Schneidenschartigkeit zwischen 2,5 und 7 µm sowie den Radius des Schneidengrundes zwischen 0,03 und 0,12 mm ergibt sich zum einen ein bevorzugtes Schneidverhalten, zum anderen wird die Festigkeit und damit die Lebensdauer des keramischen Dentalbohrers erheblich gesteigert.

Besonders günstig ist es, wenn der Spanwinkel zwischen 0° und -25° beträgt. Dabei ist es vorteilhaft, wenn der Keilwinkel zwischen 40° und 60° beträgt.

Durch die Abrundung des Schneidengrundes mit dem oben genannten Radius sowie durch die erfindungsgemäße vorgesehene keramikgerechte Abrundung der Übergänge ergibt sich eine hohe Belastbarkeit der Schneiden. Zum anderen werden die abgetragenen Späne gut abtransportiert und können nicht im Spangrund festklemmen. Dies führt zu einer verbesserten Exkavierungsleistung des erfindungsgemäßen Dentalbohrers. Durch die erfindungsgemäße Ausgestaltung ergibt sich somit eine keramikgerechte Konstruktion mit einer Abrundung von Kanten und Übergängen. Die Schneiden selbst sind jedoch scharf geschliffen und weisen im Querschnitt eine Schneidspitze auf.

Im Folgenden wird die Erfindung anhand von Ausführungsbeispielen in Verbindung mit der Zeichnung beschrieben. Dabei zeigt:
- Fig. 1: eine schematische Seitenansicht eines erfindungsgemäßen Dentalbohrers mit im Wesentlichen kugelförmigen Kopf,
- Fig. 2: eine Seitenansicht, analog Fig. 1 mit einem im Wesentlichen birnenförmigen Kopf,
- Fig. 3 und 4: stirnseitige Draufsichten auf zwei unterschiedliche Ausführungsbeispiele,
- Fig. 5 und 6: Schnittansichten in der Radialebene der in den Figuren 3 und 4 gezeigten Ausführungsbeispiele,
- Fig. 7 und 8: schematische Seitenansichten weiterer Ausführungsbeispiele, wobei die Schneiden mit zumindest einem Querhieb versehen sind,
- Fig. 9: eine perspektivische Seitenansicht eines Ausführungsbeispiels, analog Fig. 1, wobei jede Schneide einen Querhieb umfasst, und
- Fig. 10 und 11: Detailansichten eines Ausführungsbeispiels, bei welchem jede Schneide mehrere Querhiebe umfasst.

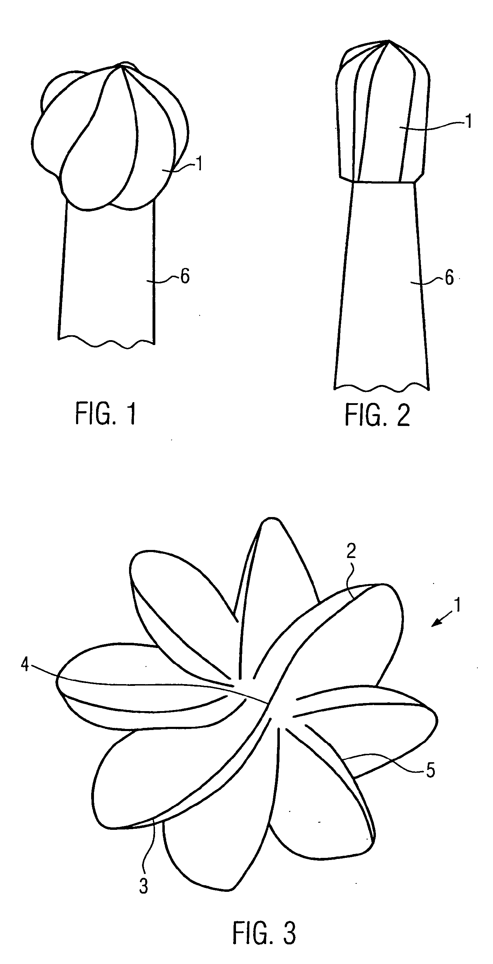

Wie sich aus den Figuren 1 und 2 ergibt, umfasst der erfindungsgemäße Dentalbohrer einen Kopf 1, der an einem Schaft 6 befestigt und einstückig mit diesem verbunden ist. Die Anzahl der Schneiden sowie die Form des Kopfes hängt von dem jeweiligen Verwendungszweck und der jeweiligen Ausgestaltung ab. Fig. 1 zeigt einen im Wesentlichen kugelförmigen Kopf, während der Kopf gemäß Fig. 2 im Wesentlichen birnenförmig ausgebildet ist.

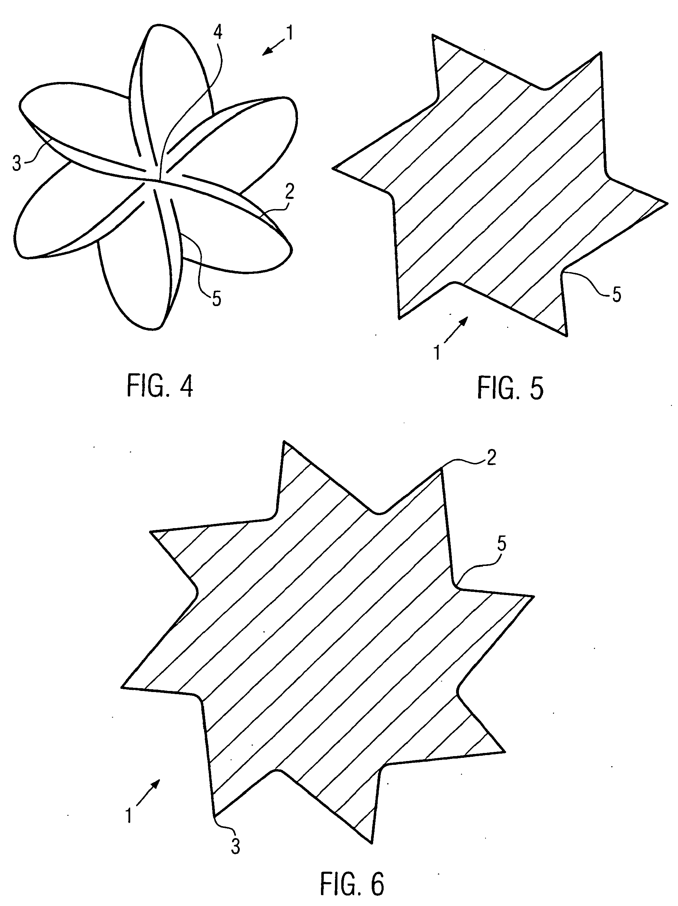

Die Figuren 3 und 4 zeigen jeweils stirnseitige Ansichten zweier unterschiedlicher Ausgestaltungsformen. Die Ausgestaltungsform der Fig. 3 umfasst insgesamt acht Schneiden. Dabei sind zwei Schneiden 2, 3 so ausgebildet, dass sie stirnseitig ineinander übergehen und eine Übergangsschneide oder Querschneide 4 bilden.

Bei dem Ausführungsbeispiel der Fig. 4 sind insgesamt sechs Schneiden vorgesehen, wobei auch die mit den Bezugszeichen 2 und 3 bezeichneten Schneiden in eine Übergangsschneide 4 oder Querschneide übergehen.

Die Figuren 5 und 6 zeigen jeweils Schnittansichten in der Radialebene (bezogen auf die Drehachse des Dentalbohrers). Die Fig. 5 korrespondiert zu dem Ausführungsbeispiel der Fig. 4, während die Fig. 6 zu dem Ausführungsbeispiel der Fig. 3 korrespondiert. Erfindungsgemäß ist vorgesehen, dass der Schneidengrund 5 einen Radius zwischen 0,03 und 0,12 mm aufweist. Es erfolgt somit eine Abrundung der Übergänge, welche Kerbspannungen herabsetzt und während des Betriebs die Anlagerung von Spänen verhindert.

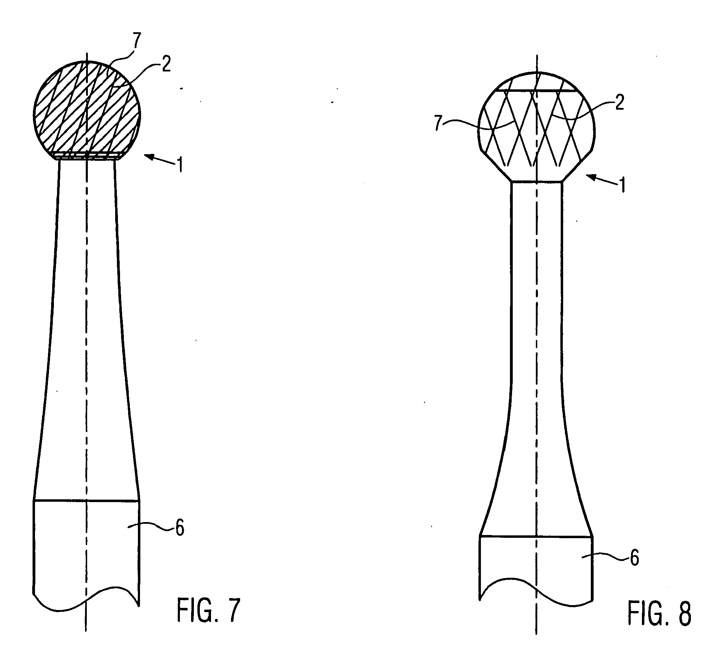

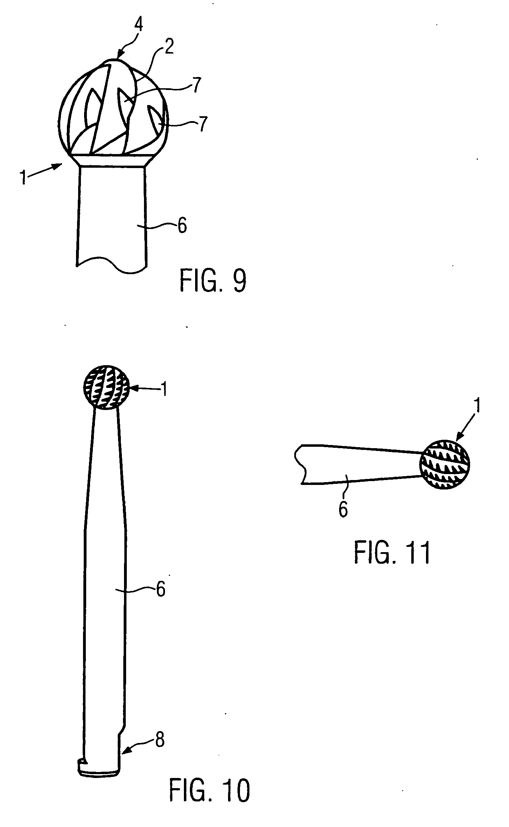

Die Fig. 7 bis 11 zeigen jeweils Ausführungsbeispiele mit einem kugelförmigen Kopf 1, wobei an jeder der Schneiden 2, 3 zumindest ein Querhieb vorgesehen ist. Insbesondere die Fig. 9 zeigt ein Ausführungsbeispiel, bei welchem ein Querhieb 7, welcher in Form einer muldenartigen, gerundeten Ausnehmung ausgebildet ist, an jeder der Schneiden 2, 3 vorgesehen ist.

Die Fig. 10 und 11 zeigen ein Ausführungsbeispiel, bei welchem jede Schneide jeweils mit mehreren Querhieben versehen ist. Diese können wendelartig umlaufend um die Längsachse angeordnet sein. Die Querhiebe 7 können einreihig (so wie dies in Fig. 9 dargestellt ist) oder mehrreihig (so wie dies in den Fig. 10 und 11 gezeigt ist) angeordnet sein.

Die Fig. 10 zeigt weiterhin, dass am unteren Ende des Schaftes 6 ein Einspannbereich 8 für den Dentalbohrer ausgebildet ist, welcher eine Abplattung sowie eine umlaufende Befestigungsnut umfasst, so wie dies aus dem Stand der Technik vorbekannt ist.

### Bezugszeichenliste

- 1: Kopf
- 2: Schneide
- 3: Schneide
- 4: Übergangsschneide/Querschneide
- 5: Schneidengrund
- 6: Schaft
- 7: Querhieb
- 8: Einspannbereich

## Patentansprüche

1. Dentalbohrer mit einem mit Schneiden versehenen Kopf (1), welcher eine zumindest abgerundete Grundform aufweist, wobei zwei der Schneiden (2, 3) stirnseitig in eine Übergangsschneide (4) übergehen, **dadurch gekennzeichnet, dass** der Dentalbohrer aus einem keramischen Material gefertigt ist und dass die Schneidenschartigkeit der bei der Herstellung des Dentalbohrers und der Erzeugung der Schneide ergebenden Scharte zwischen 2,5 und 7 µm beträgt und der Schneidengrund (5) einen Radius zwischen 0,03 und 0,12 mm aufweist.

2. Dentalbohrer nach Anspruch 1, **dadurch gekennzeichnet, dass** der Spanwinkel zwischen 0° und -25° beträgt.

3. Dentalbohrer nach Anspruch 1 oder 2, **dadurch gekennzeichnet, dass** der Keilwinkel zwischen 40° und 60° beträgt.

4. Dentalbohrer nach einem der Ansprüche 1 bis 3, **dadurch gekennzeichnet, dass** dieser vier Schneiden aufweist.

5. Dentalbohrer nach einem der Ansprüche 1 bis 3, **dadurch gekennzeichnet, dass** dieser sechs Schneiden aufweist.

6. Dentalbohrer nach einem der Ansprüche 1 bis 3, **dadurch gekennzeichnet, dass** dieser acht Schneiden aufweist.

7. Dentalbohrer nach einem der Ansprüche 1 bis 3, **dadurch gekennzeichnet, dass** dieser zehn Schneiden aufweist.

8. Dentalbohrer nach einem der Ansprüche 1 bis 7, **dadurch gekennzeichnet, dass** der Kopf (1) eine runde Konturform aufweist.

9. Dentalbohrer nach einem der Ansprüche 1 bis 7, **dadurch gekennzeichnet, dass** der Kopf (1) eine birnenförmige Konturform aufweist.

10. Dentalbohrer nach einem der Ansprüche 1 bis 9, **dadurch gekennzeichnet, dass** die Schneiden (2, 3) jeweils mit zumindest einem Querhieb (7) versehen sind.

11. Dentalbohrer nach Anspruch 10, **dadurch gekennzeichnet, dass** der Querhieb in Form einer abgerundeten, in den Schneidenbereich eingebrachten Nut ausgebildet ist.

## Claims

1. A dental drill comprising a head (1) provided with cutting edges, said head having an at least rounded basic shape, wherein two of the cutting edges (2, 3) merge into a transitional cutting edge (4) on the face side, **characterized in that** the dental drill is made of a ceramic material and that the chipping of the notch resulting from the manufacturing of the dental drill and the generation of the cutting edge lies between 2.5 and 7 µm and that the cutting edge base (5) has a radius between 0.03 and 0.12 mm.

2. The dental drill of claim 1, **characterized in that** the chip angle lies between 0° and -25°.

3. The dental drill of claim 1 or 2, **characterized in that** the wedge angle lies between 40° and 60°.

4. The dental drill of one of claims 1 to 3, **characterized in that** same comprises four cutting edges.

5. The dental drill of one of claims 1 to 3, **characterized in that** same comprises six cutting edges.

6. The dental drill of one of claims 1 to 3, **characterized in that** same comprises eight cutting edges.

7. The dental drill of one of claims 1 to 3, **characterized in that** same comprises ten cutting edges.

8. The dental drill of one of claims 1 to 7, **characterized in that** the head (1) has a round outline shape.

9. The dental drill of one of claims 1 to 7, **characterized in that** the head (1) has a pear-shaped outline.

10. The dental drill of one of claims 1 to 9, **characterized in that** the cutting edges (2, 3) are respectively provided with at least one cross-cut (7).

11. The dental drill of claim 10, **characterized in that** the cross-cut is formed in the shape of a rounded groove realized in the cutting edge region.

## Revendications

1. Fraise dentaire avec une tête (1) munie de tranchants, laquelle présente une forme de base au moins arrondie, deux des tranchants (2, 3) fusionnant frontalement dans un tranchant de transition (4), **caractérisée en ce que** la fraise dentaire est fabriquée dans une matière céramique, et **en ce que** l'ébréchure de tranchant produite par la fabrication de la fraise dentaire et la finition du tranchant est comprise entre 2,5 et 7 µm, et **en ce que** le fond du tranchant (5) présente un rayon compris entre 0,03 et 0,12 mm.

2. Fraise dentaire selon la revendication 1, **caractérisée en ce que** l'angle de coupe est compris entre 0° et -25°.

3. Fraise dentaire selon la revendication 1 ou la revendication 2, **caractérisée en ce que** l'angle de taillant est compris entre 40° et 60°.

4. Fraise dentaire selon l'une des revendications 1 à 3, **caractérisée en ce que** celle-ci présente quatre tranchants.

5. Fraise dentaire selon l'une des revendications 1 à 3, **caractérisée en ce que** celle-ci présente six tranchants.

6. Fraise dentaire selon l'une des revendications 1 à 3, **caractérisée en ce que** celle-ci présente huit tranchants.

7. Fraise dentaire selon l'une des revendications 1 à 3, **caractérisée en ce que** celle-ci présente dix tranchants.

8. Fraise dentaire selon l'une des revendications 1 à 7, **caractérisée en ce que** la tête (1) présente un contour rond.

9. Fraise dentaire selon l'une des revendications 1 à 7, **caractérisée en ce que** la tête (1) présente un contour piriforme.

10. Fraise dentaire selon l'une des revendications 1 à 9, **caractérisée en ce que** les tranchants (2, 3) sont pourvus d'au moins une taille transversale (7) chacun.

11. Fraise dentaire selon la revendication 10, **caractérisée en ce que** la taille transversale se présente sous la forme d'une gorge arrondie ménagée au niveau du tranchant.
